(19) Europäisches Patentamt
European Patent Office
Office européen des brevets

(11) Veröffentlichungsnummer: **0 253 339 B1**

(12) **EUROPÄISCHE PATENTSCHRIFT**

(45) Veröffentlichungstag der Patentschrift: **29.12.93**

(51) Int. Cl.⁵: **C08G 59/40**, C09D 163/00

(21) Anmeldenummer: **87110037.6**

(22) Anmeldetag: **11.07.87**

# (54) Herstellung von Beschichtungen mit erhöhter Zwischenschichthaftung unter Verwendung von Epoxidharz/Härter-Mischungen.

(30) Priorität: **18.07.86 DE 3624314**

(43) Veröffentlichungstag der Anmeldung:
**20.01.88 Patentblatt 88/03**

(45) Bekanntmachung des Hinweises auf die Patenterteilung:
**29.12.93 Patentblatt 93/52**

(84) Benannte Vertragsstaaten:
**AT BE CH DE ES FR GB IT LI NL SE**

(56) Entgegenhaltungen:
**EP-A- 0 120 466**
**EP-A- 0 149 156**
**EP-A- 0 172 685**
**BE-A- 673 373**

**WPIL, FILE SUPPLIER, Nr. 87-048994, Derwent Publications, ltd, London, GB; & SU-A-1 240 766**

**Ullmann's Enzyklopädie der technischen Chemie, 4. Aufl., Bd. 15, S. 597-8, Verlag Chemie Weinheim (1978)**

(73) Patentinhaber: **HOECHST AKTIENGESELLSCHAFT**

**D-65926 Frankfurt(DE)**

(72) Erfinder: **Marten, Manfred**
**Am Eiskeller 55**
**D-6500 Mainz(DE)**
Erfinder: **Godau, Claus**
**Halbritter Strasse 9**
**D-6229 Kiedrich(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.6/3.3.1)

## Beschreibung

Es ist bekannt, daß Oberflächenbeschichtungen aus Epoxidharzen und Härtungsmitteln auf Basis von Aminverbindungen gute chemische und physikalische Eigenschaften aufweisen.

Bei der Herstellung von Epoxidharzbeschichtungen für Beton, Stahl, dickschichtige Bodenbeschichtungen, Rohrbeschichtungen, laminierte Beschichtungen für chemikalienbelastete Objekte, Klebstoffe, Vergußmassen und Isolierungen von Elektroteilen ist es im allgemeinen erforderlich, einen Anstrichaufbau von mehreren Schichten vorzunehmen. Die zeitliche Anstrichfolge richtet sich nach dem Trocknungsverhalten des jeweiligen Epoxidharz/Härter Systems. Voraussetzung für einen erneuten Anstrich ist die Klebfreiheit der vorhergehenden Beschichtung, wobei im allgemeinen ein Zeitraum von 24 Stunden zwischen den einzelnen Anstrichen liegt.

Es ist bekannt, daß bei vielen Epoxidharzsystemen, insbesondere bei Herstellung eines mehrschichtigen Anstrichaufbaus unter bestimmten klimatischen Bedingungen, z.B. bei tieferen Temperaturen (bis zu 5 °C) und bei hoher Luftfeuchtigkeit, eine mangelnde Zwischenschichthaftung beobachtet wird. Beim Abrißversuch wird dann nicht die Haftfestigkeit des Filmes am Untergrund erfaßt, sondern es werden geringere Festigkeitswerte erhalten, die z.B. von denen der Zwischenschichten beeinflußt sind.

Aus der DE-A-1 570 488 ist bekannt, daß man 1,2-Alkylencarbonate zur Modifizierung von Epoxidharzmassen einsetzen kann. Die Carbonate erniedrigen die Viskosität der Massen und reagieren mit aliphatischen Aminhärtern unter Bildung von Urethanen. Die derart modifizierten Epoxidverbindungen sollen ausgezeichnete Penetrations-, Fließ und Netzeigenschaften und eine hohes Füllstoffaufnahemvermögen besitzen. Nach dieser Veröffentlichung wird die Härtung der Epoxidharzmassen mit verschiedenen Aminen stets bei erhöhter Temperatur vorgenommen. Es werden jedoch keine Angaben darüber gemacht, daß die Epoxidharzmischungen zur Herstellung von Beschichtungen verwendet werden, die bei Temperaturen bis ca. 5 °C gehärtet werden können. Außerdem wird nichts über die Verwendung dieser Systeme für mehrschichtige Anstriche oder Überzüge, für die eine gute Zwischenschichthaftung erforderlich ist, ausgesagt. Als Härtungsmittel werden primäre, sekundäre und tertiäre Amine, quaternäre Ammoniumverbindungen, Friedel-Crafts-Katalysatoren und organische Polycarbonsäuren sowie ihre Anhydride genannt.

In der US-A-4,122,069 werden zur Verbesserung der Adhäsionseigenschaften Zusätze von Polyoxyalkylendicarbonaten mit endständigen Dihydroxyalkylcarbamatgruppen, die ein Molekulargewicht von 2000 - 3000 aufweisen, für die Polyamin-Epoxidharz-Härtung angegeben. Hinweise über eine Verbesserung der Zwischenschichthaftung und daraus hergestellte Lackschichten sind hierin gleichfalls nicht angegeben.

Es war daher erwünscht, die Nachteile der bisher bekannten Epoxidharz-Härtersystem einzuschränken bzw. auszuschalten.

Gegenstand der Erfindung ist ein Verfahren zur Herstellung eines Mehrschichtüberzuges auf einem Substrat, dadurch gekennzeichnet, daß die Schichten hergestellt werden durch

1. Aufbringen einer Mischung, enthaltend
   A) Epoxidverbindungen, sowie
   B) cyclische Carbonate,
   C) Epoxidhärter, wobei als Epoxidhärter Mannichbasen aus aliphatischen, araliphatischen und/oder cycloaliphatischen Polyaminen, Aldehyden und ein- oder mehrwertigen Phenolen mit mindestens einer aldehydreaktiven Stelle im Kern,
      oder eine Mischung aus 64 Gew.% Isophorondiaminen und 36 Gew.% eines AminAdduktes aus einem Polyglycidylether der 2,2'-Bis(4-hydroxy-2-phenyl)-propans mit einem Epoxidequivalent von 185 und Isophorondiamin verwendet werden oder
   D) ein Anlagerungsprodukt der Komponenten B) und C), gegebenenfalls in Mischung mit Komponenten B) und/oder C), und
2. Härten dieser Mischung bei Temperaturen zwischen 5 °C und der Raumtemperatur.

Weiterhin betrifft die Erfindung einen gemäß dieses Verfahrens erhältlichen Mehrschichtüberzug. Dieser zeichnet sich unter anderem dadurch aus, daß er schnell trocknet, bei tiefen Temperaturen aushärtet und eine gute Zwischenhaftung aufweist. Durch den Einfluß der in den Härtern gegebenenfalls vorhandenen bzw. bei der Härtungsreaktion entstehenden Hydroxylgruppen findet eine Beschleunigung des Härtungsprozesses statt, so daß auf den Zusatz von Beschleunigern häufig verzichtet werden kann. Auch das sogenannte "Weißanlaufen" der Beschichtungen bei Einwirkung von Feuchtigkeit wird durch die Verwendung der erfindungsgemäßen Mischungen zurückgedrängt. Besonders hervorzuheben ist jedoch die hervorragende Verbesserung der Zwischenschichthaftung bei dem mehrschichtigen Anstrichaufbau.

Bei den erfindungsgemäß als Komponente A) verwendeten Epoxidverbindungen kommt eine Vielzahl der hierfür bekannten Epoxidverbindungen in Betracht, die im Mittel mehr als eine Epoxidgruppe pro Molekül enthalten. Diese Epoxidverbindungen können dabei sowohl gesättigt als auch ungesättigt sowie

aliphatisch, cycloaliphatisch, aromatisch oder heterocyclisch sein und auch Hydroxylgruppen aufweisen. Sie können weiterhin solche Substituenten enthalten, die unter den Mischungs- oder Reaktionsbedingungen keine störenden Nebenreaktionen verursachen, beispielsweise Alkyl- oder Arylsubstituenten, Äthergruppierungen und ähnliche. Vorzugsweise handelt es sich dabei um Glycidylether, die sich von mehrwertigen Phenolen, insbesondere Bisphenolen sowie Novolaken ableiten und deren Epoxidäquivalentgewichte zwischen 160 und 500, insbesondere jedoch zwischen 160 und 200 liegen. Als mehrwertige Phenole sind beispielsweise zu nennen: Resorcin, Hydrochinon, 2,2-Bis-(4-hydroxyphenyl)-propan (Bisphenol A), Isomerengemische des Dihydroxydiphenylmethans (Bisphenol F), Tetrabrombisphenol A, 4,4'-Dihydroxydiphenylcyclohexan, 4,4'-Dihydroxy-3,3'-dimethyldiphenylpropan,4,4'-Dihydroxydiphenyl, 4,4'-Dihydroxybenzophenol, Bis-(4-hydroxyphenyl)-1,1-äthan, Bis-(4-hydroxyphenyl)-1,1-isobutan, Bis-(4-hydroxy-tert.-butylphenyl)-2,2-propan, Bis-(2-hydroxynaphthyl)-methan, 1,5-Dihydroxynaphthalin, Tris-(4-hydroxyphenyl)-methan, Bis-(4-hydroxyphenyl)-ether, Bis-(4-hydroxyphenyl-)sulfon u.a. sowie die Chlorierungs- und Bromierungsprodukte der vorstehend genannten Verbindungen. Ganz besonders bevorzugt werden flüssige Diglycidylether auf Basis von Bisphenol A mit einem Epoxidäquivalentgewicht von 180 bis 190. Es können auch Polyglycidylester von Polycarbonsäuren verwendet werden, die man durch die Umsetzung von Epichlorhydrin oder ähnlichen Epoxyverbindungen mit einer aliphatischen, cycloaliphatischen oder aromatischen Polycarbonsäure, wie Oxalsäure, Bernsteinsäure, Adipinsäure, Glutarsäure, Phthalsäure, Terephthalsäure, Hexahydrophthalsäure, 2,6-Naphthalindicarbonsäure und dimerisierte Linolensäure erhält. Beispiele sind Adipinsäurediglycidylester, Phthalsäurediglycidylester und Hexahydrophthalsäurediglycidylester. Eine ausführliche Aufzählung der geeigneten Epoxidverbindungen findet sich in dem Handbuch "Epoxidverbindungen und Epoxidharze" von A. M. Paquin, Springer Verlag, Berlin 1958, Kapitel IV und in Lee, Neville "Handbook of Epoxy Resins", 1967, Chapter 2. Es können auch Mischungen von mehreren Epoxidharzen verwendet werden.

Die erfindungsgemäß eingesetzten cyclischen Carbonate B) sind im allgemeinen bei Raumtemperatur flüssige Verbindungen der Formel (I)

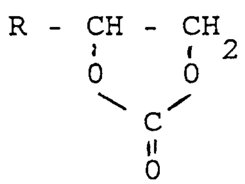

(I)

in dieser steht R für
Wasserstoff, einen Alkylrest mit 1-18 C-Atomen hier wie im nachfolgenden geradkettig oder verzweigt;
die Formelreste $-CH_2-O-R^1$ (Ia) oder $-CH_2-O-CO-R^1$ (Ib), worin $R^1$ ein Alkylrest mit 1 bis 18 C-Atomen, ein monocyclischer Aryl- oder Aralkylrest mit 6 bis 15 C-Atomen ist, wobei der Arylrest unsubstituiert ist oder jeweils bis zu drei Alkylreste mit 1 bis 4 C-Atomen, vorzugsweise 1 oder 2 Alkylreste enthält;
die Formelreste $-CH_2\ 0-R^2-0-CH_2-A$ (Ic) oder $-CH_2-0-CO-R^2-CO-0-CH_2-A$ (Id), worin $R^2$ ein Alkylenrest mit 1 bis 18 C-Atomen, geradkettig oder verzweigt, oder ein Phenylenrest und A der in Formel (I) dargestellte cyclische Carbonatrest ist, wobei im Falle von (Ic) $R^2$ auch ein Rest der Formel (Ie)

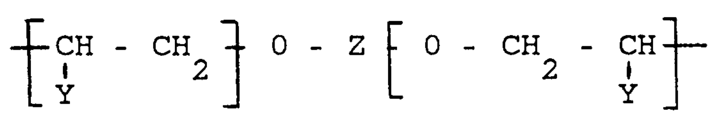

ist, in dem Z ein Alkylenrest mit 2 bis 5 C-Atomen, Y Wasserstoff oder Methyl darstellt und m und n jeweils Werte von 0 bis 30 haben mit der Maßgabe, daß höchstens einer der Indices m oder n Null ist;
Reste der Formel (If)

$$-CH_2-0-CH_2-\overset{R^3}{\underset{R^4}{C}}-CH_2-0-CH_2-A$$

wobei $R^3$ Wasserstoff ist, wenn $R^4$ $-0-CH_2-A$ ist und $R^3$ $-CH_3$ , $-C_2H_5$ oder $-CH_2-0-CH_2-A$ ist, wenn $R^4$ $-CH_2-0-CH_2-A$ ist.

Verbindungen der Komponente B) sind also Mono- oder Polycarbonate, z.B. solche, die eine 1,2-Carbonatgruppe enthalten, wie Alkylencarbonate mit 2 - 18 C-Atomen in der Alkylengruppe z.B. Ethylencarbonat, Propylencarbonat, 1,2-Butylencarbonat sowie solche cyclischen Carbonate, die durch Umsetzung von $CO_2$ mit beispielsweise folgenden Epoxiden erhalten werden: höhere aliphatische Epoxide wie Hexen-, Octen-, Dodecen und Octadecen-1-oxid.

Weitere Carbonate B), die erfindungsgemäß eingesetzt werden können, sind z.B. aus Epoxykomponenten hergestellt worden, die im Durchschnitt mindestens eine endständige 1,2-Epoxygruppe aufweisen. Vorzugsweise sind dies solche die im Durchschnitt mindestens eine substituierte oder nicht substituierte Glycidylethergruppe oder Glycidylestergruppe enthalten, z.B. n-Butylglycidylether, Ethylhexylglycidylether, Monoglycidylether höherer isomerer Alkohole, Phenylglycidylether, p-tert.Butylphenylglycidylether, o-Kresylglycidylether, Versaticsäureglycidylester, Ethandiol-1,2-diglycidylether, Butandioldiglycidylether, Neopentylglycoldiglycidylether, Hexandioldiglycidylether, Polypropylenglycoldiglycidylether Polyethylenglycoldiglycidylether, Mischpolyethylenpropylenglycoldiglycidylether, Glycidylether des Glycerins, Trimethylolpropans und des Pentaerythrits, ferner Resorcindiglycidylether, Adipinsäure- und die verschiedenen Phthalsäurediglycidylester. Die Epoxidverbindungen können auch nur teilweise zum Carbonat umgesetzt sein und somit noch restliche Epoxidgruppen enthalten. Den entsprechenden cyclischen Carbonaten können auch technische Gemische von Glycidylethern bzw. -estern zugrundeliegen, weiterhin können als Komponente B) auch Gemische der verschiedenen Carbonate verwendet werden. Beispiele für die verwendeten Carbonate sowie ihre Herstellung sind in der PCT(WO)-Patentanmeldung 84/03 701 sowie in den deutschen Patentanmeldungen P 35 29 263 und P 36 00 602 beschrieben. Die Herstellung der Epoxidverbindungen für die Carbonatisierung kann im Falle der Reste (Ia) bis (If) der obigen Formel (I) durch Umsatz entsprechender Alkohole mit Glycidylverbindungen wie Epichlorhydrin erfolgen.

Die Komponente B) wird im allgemeinen in Mengen von 1 bis 30, vorzugsweise von 5 bis 15 Gew.-%, bezogen auf Komponente A),eingesetzt.

Als Epoxidhärter C) werden Mannich-Basen eingesetzt. Besonders vorteilhaft ist es, die Mannich-Basen C) durch Umsetzung mit cyclischen Carbonaten, vorzugsweise Ethylen- und/oder Propylencarbonat zu Hydroxyalkylurethanhaltigen Derivaten D) zu modifizieren. Die auf diese Weise erhaltenen Härtungsmittel stellen Reaktionsprodukte aus den Komponenten B) und C) dar und können erfindungsgemäß - anstelle der Mischungen der Komponenten B) und C) - mit der Komponente A) z.B. Polyglycidylether bzw. mit Mischungen aus Polyglycidylethern verwendet werden. Gegebenenfalls können diese Reaktionsprodukte aus B) und C) auch in Mischung mit weiteren cyclischen Carbonaten (B) und/oder Epoxidhärtern (C) zum Einsatz kommen.

Geeignete Mannich-Basen werden durch Kondensation von Polyaminen, vorzugsweise Diethylentriamin, Triethylentetramin, Isophorondiamin, 2,2,4- bzw. 2,4,4-Trimethylhexamethylendiamin, 1,3- und 1,4-Bis-(aminomethyl)cyclohexan, insbesondere m- und p-Xylylendiamin mit Aldehyden, vorzugsweise Formaldehyd und ein- oder mehrwertigen Phenolen mit mindestens einer aldehydreaktiven Kernstelle, z.B. die verschiedenen Kresole und Xylenole, p-tert.-Butylphenol, Resorcin, 4,4'-Dihydroxydiphenylmethan, 4,4'-Dihydroxydiphenyl-2,2-propan, vorzugsweise aber Phenol ($C_6H_5OH$) hergestellt.

Solche Mannich-Basen haben die Formel

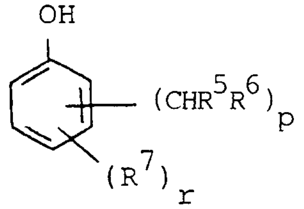

worin

- $R^5$ Wasserstoff, eine Alkylgruppe mit 1-4 C-Atomen oder der Phenylrest ist,
- $R^6$ den Rest von Xylylendiamin oder deren Hydrierungsprodukte darstellt und
- $R^7$ Wasserstoff oder eine Methyl-, tert.-Butyl- oder Hydroxylgruppe sowie der Rest

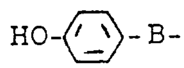

ist, in der B $-CH_2-$, $-C(CH_3)_2$ oder $-SO_2-$ bedeutet, r und p ist jeweils eine ganze Zahl von 1 bis 3.

Die molaren Verhältnisse der einzelnen Komponenten Phenol, Polyamin und Aldehyd können je nach den gewünschten Eigenschaften der Kondensationsprodukte in weiten Grenzen bei der Herstellung variiert werden und betragen 1:1:1 bis 1:3:3, vorzugsweise bis 1:2,4:1,3. Derartige Mannich-Basen sind als Härter für Epoxidverbindungen beispielsweise in den DE-Offenlegungsschriften 20 25 159 und 20 25 343 beschrieben.

Als Epoxidhärter C) eignet sich auch eine Mischung aus 64 % Isophorondiamin und 36 % eines Epoxidharz-Adduktes aus einem Polyglycidylether des 2,2-Bis(4-hydroxyphenyl)propans (Bisphenol A) mit einem Epoxidequivalent von 185 und Isophorondiamin.

Die Viskositäten dieser Epoxidharz-Addukte liegen bei 20 - 10 000, vorzugsweise 100 - 5000 mPa.s (25 °C) und der Epoxidharzanteil bei 3 - 30, vorzugsweise 7 - 20 %. Zur Erniedrigung der Viskosität können u.a. hydroxylgruppenhaltige Lösungsmittel, wie sie im weiteren Verlauf angeführt sind, zugesetzt werden. Bevorzugt wird Benzylalkohol verwendet.

Das Wasserstoffaktiv-Äquivalent der Komponente (C) liegt im allgemeinen zwischen 40 und 200, vorzugsweise zwischen 50 und 120. Diese Komponente C) bzw. das Anlagerungsprodukt D) von B) und C) werden in der Regel in solchen Mengen eingesetzt, daß das Verhältnis Epoxidäquivalent zu Wasserstoffaktiv-Äquivalent 1:0,8 bis 1:1,2, vorzugsweise 1:1, beträgt.

Es liegt naturgemäß im Rahmen der Erfindung als Komponente C) auch verschiedene Epoxidhärter im Gemisch einzusetzen.

Das Anlagerungsproduct D) von Komponente B) an Komponente C), bei dem es sich um ein Hydroxyalkylurethan-Derivat handelt, wird durch Umsetzung der Komponenten, vorzugsweise bei höheren Temperaturen, beispielsweise bei 80 bis 90 °C, hergestellt. Im allgemeinen ist nach drei Stunden Reaktionszeit die theoretisch berechnete Aminzahl erreicht. Die den Epoxidhärter C) zugesetzten Carbonatmengen sind im allgemeinen so bemessen, daß 0,1 - 40, vorzugsweise 5 - 30 % des aktiven Amin-Wasserstoffs zu Hydroxyalkylurethangruppen umgesetzt werden. Dieses Anlagerungsprodukt kann erfindungsgemäß gegebenenfalls mit zusätzlicher Komponente B) und/oder C) eingesetzt werden. Das Molekulargewicht ($\overline{M}_w$, bestimmt mittels der Gelpermeationschromatographie; Polystyrol-Standard) dieser Anlagerungsprodukte liegt im allgemeinen unterhalb von 1500 und vorzugsweise zwischen 300 und 1000.

Es ist auch möglich, zuerst die Addition der Carbonate mit den Polyaminen vorzunehmen, um anschließend die Umsetzung mit Aldehyden und Phenolen zu Mannich-Basen bzw. die Reaktion mit Epoxidharzen durchzuführen.

Um die Oberflächeneigenschaften zu verbessern und das sogenannte "Weißanlaufen" zu vermeiden, können den erfindungsgemäßen Mischungen bis zu 10 %, bezogen auf die Härterkomponente C), bzw. das Reaktionsprodukt aus B) und C) primäre aliphatische Monoalkylamine mit 5 - 18 Kohlenstoffatomen im Alkylrest, zugesetzt werden. Derartige Amine sind z.B. Hexyl-, Heptyl-, Octyl-, Nonyl-, iso-Nonyl-, Decyl- oder Dodecylamin, einzeln oder im Gemisch (vgl. hierzu die EP-Offenlegungsschrift 103 266).

In besonderen Fällen, wo z.B. eine erhöhte Elastizität erwünscht ist, können, zusätzlich zur Komponente B), zur Modifizierung geringe Mengen reaktiver Verdünner wie Monoglycidylether höherer Alkohole mit 4 - 14 C-Atomen, z.B. Butylglycidylether, langkettige aliphatische Glycidylether mit 5 bis 22 Kohlenstoffatomen, wie Äthyl-hexylglycidylether, Monoglycidylether eines höheren isomeren Alkoholgemisches, Diglycidylether mehrwertiger Alkohole z.B. 1,4-Butandioldiglycidylether, Neopentylglykoldiglycidylether, 1,6-Hexandioldiglycidylether, Aralkyl-glycidylether z.B. Kresylglycidylether, Butylphenylglycidylether sowie Versaticsäureglycidylester in Mengen bis zu 30, vorzugsweise 10 - 20 Gew.-%, bezogen auf Polyglycidylether, mitverwendet werden.

Zur Beschleunigung der Härtungsreaktion können hydroxylgruppenhaltige Lösungsmittel wie Benzylalkohol, 2-Methyl-benzylalkohol, 1-Phenylethanol, 2-Phenoxyethanol Furfurylalkohol, Pineöl und Alkohole mit 2 bis 18 Kohlenstoffatomen den Mischungen zugesetzt werden.

Weiterhin können übliche Extenderharze, wie nicht-reaktive Epoxidharz-Modifizierungsmittel, Teere, Phthalsäureester und Cumaronöle zugegen sein. Den Harzmischungen können im allgemeinen alle bei der Verwendung von Epoxidharzen weiteren üblichen Zusätze zugefügt werden, z.B. Pigmente, Pigmentpasten, Füllstoffe, wie Quarzmehl, Silicate, Kreide, Gips, Schwerspat, Titandioxid, Ruß, Metallpulver, organische und anorganische Fasern, ferner Farbstoffe, Verlaufmittel Thixotropierungsmittel, Entschäumer und/oder Netzmittel, flammhemmende Stoffe, Beschleuniger und dergleichen.

Die Gelier- und Härtungszeiten der erfindungsgemäßen Mischungen können auch beeinflußt werden z.B. durch Phenole und Alkylphenole mit 1 - 12 C-Atomen in der Alkylgruppe wie Kresol, die verschiedenen Xylenole, Nonylphenol, Polyphenole wie Bisphenol A und F, OH-gruppenhaltige aromatische Carbonsäuren wie Salicylsäure Benzoesäure, p-Hydroxybenzoesäure sowie durch tert. Amine wie Dimethylaminobenzylamin, 1,3,5-Tris-(dimethylamino) phenol und andere übliche Beschleuniger.

Die Mischungen können erfindungsgemäß verwendet werden zum Beschichten von verschiedenen organischen und anorganischen Substraten wie Metallen, Beton, Faserzement, Glas, Gummi, Leder, Holz, Textilien, Kunststoffen, ferner zur Herstellung dickschichtiger Bodenbeschichtungen, als Klebstoffe, Vergußmassen oder zur Isolierung von Elektroteilen. Spezielle Verwendung finden sie als Beschichtung von Rohren und chemikalienbelasteten Objekten. Der Auftrag der Mischungen kann nach den üblichen Methoden erfolgen, wie Streichen, Sprühen, Rakeln, Tauchen, Gießen usw.

In den nachfolgenden Beispielen sind die Angaben für T (Teile) und % stets auf Gewicht bezogen.

## Beispiele

Härter A: Mischung aus 84,0 % einer Mannich-Base aus Phenol, Formaldehyd und m-Xylylendiamin (Molverhältnis 1:1,24:1,4) 13,5 % Benzylalkohol und 2,5 % Octylamin mit einem Wasserstoffaktivequivalent von 79, 8 und einer Viskosität von 2000 mPa.s (25 °C).

Härter B - E:

Gemäß der nachfolgenden Tabelle 1 wurde eine Mischung der Mannich-Base von Härter A und Benzylalkohol unter Rühren bei 50 °C mit dem Carbonat versetzt, das Reaktionsgemisch für 3 Stunden bei 80 °C gehalten und anschließend mit 2,5 T Octylamin verdünnt.

Tabelle 1

| Härter | B | C | D | E |
|---|---|---|---|---|
| Mannich-Base (T) | 82 | 80 | 82 | 80 |
| Benzylalkohol (T) | 13 | 12,5 | 13 | 12,5 |
| Ethylencarbonat (T) | 2,5 | 5 | - | - |
| Propylencarbonat (T) | - | - | 2,5 | 5 |
| Wasserstoffaktivequival. | 85,7 | 92,5 | 85,1 | 91,2 |
| Viskosität mPa.s (25 °C) | 3040 | 5780 | 2920 | 5240 |

Härter F: Mischung aus 35 % Isophorondiamin, 20 % eines Amin-Adduktes aus einem Polyglycidylether des 2,2-Bis(4-hydroxy-2-phenyl)propans mit einem Epoxidequivalent von 185 und Isophorondiamin und 45 % Benzylalkohol, Viskosität 100 mPa.s (25 °C), Wasserstoffaktivequivalent 100.

## Epoxidkomponenten

Epoxid A: Polyglycidylether des 2,2-Bis(4-hydroxyphenyl)propan, Epoxidequivalent 185.

Epoxid B: Epoxid A pigmentiert:

508 g Epoxid A, 5 g Verlaufmittel, 53 g Titandioxid, 12 g Antiabsetzmittel, 12 g Eisenoxidschwarz, 402 g Quarzmehl, und 3 g Entschäumer wurden im Dissolver dispergiert.

Epoxid C: Mischung aus 70 % Epoxid A und 30 % p-t-Butylphenylglycidylether, Epoxidequivalent 200, Viskosität 1000 mPa.s (25 °C).

Epoxid D: Epoxid C pigmentiert:

508 g Epoxid C sowie die unter Epoxid B angegebenen Pigmente und Zusatzstoffe.

Epoxid E: Mischung aus 87 % Epoxid A und 13 % Propylencarbonat, Viskosität 960 mPa.s (25 °C) Epoxidequivalent 137.

Epoxid F: Epoxid E pigmentiert:

508 g Epoxid E sowie die unter Epoxid B angegebenen Pigmente und Zusatzstoffe.

Epoxid G: Mischung aus 86,5 % Epoxid A und 13,5 % Ethylencarbonat, Viskosität 1060 mPa.s (25 °C) Epoxidequivalent 128.

Epoxid H: Epoxid G pigmentiert:
508 g Epoxid G sowie die unter Epoxid B angegebenen Pigmente und Zusatzstoffe.

Epoxid I: Mischung aus 70 % Epoxid A und 30 % eines cyclischen Carbonates, hergestellt durch 95 %ige Umsetzung des Versaticsäureglycidylesters (Cardura E 10) mit $CO_2$, Viskosität 217 mPa.s. Die Mischung hatte eine Viskosität von ca. 2000 mPa.s (25 °C) und ein Epoxidequivalent von 171 (bezogen auf eine vollständige Umsetzung des Cyclocarbonatanteils mit primären $NH_2$-Gruppen).

Epoxid K: Epoxid I pigmentiert:
508 g Epoxid I sowie die unter Epoxid B angegebenen Pigmente und Zusatzstoffe.

Epoxid L: Mischung aus 70 % Epoxid A und 30 % eines cyclischen Carbonates, hergestellt durch 99 %ige Umsetzung eines technischen Neopentylglycoldiglycidylethers mit $CO_2$, Viskosität 3100 mPa.s (25 °C). Die Mischung hatte ein Epoxidequivalent von 145 (bezogen auf eine vollständige Umsetzung des Cyclocarbonatanteils mit primären $NH_2$-Gruppen).

Epoxid M: Epoxid L pigmentiert:
508 g Epoxid L sowie die unter Epoxid B angegebenen Pigmente und Zusatzstoffe.

Epoxid N: Mischung aus 70 % Epoxid A und 30 % eines cyclischen Carbonates, hergestellt durch 99 %ige Umsetzung eines technischen Hexandioldiglycidylethers mit $CO_2$, Viskosität 7000 mPa.s (25 °C). Die Mischung hatte eine Viskosität von ca. 2000 mPa.s (25 °C) und ein Epoxidequivalent von 148 (bezogen auf vollständige Umsetzung des Cyclocarbonat-Anteils mit primären $NH_2$-Gruppen).

Epoxid O: Epoxid N pigmentiert:
508 g Epoxid N sowie die unter Epoxid B angegebenen Pigmente und Zusatzstoffe.

## Herstellung der Beschichtungen

Die unpigmentierten Epoxidharz/Härter-Massen wurden als Klarlacke in einer Schichtstärke von 200 µm auf Glas geprüft. Die Bewertung für die Trocknung und das Weißanlaufen des Films sind in der Tabelle 2 zusammengefaßt (Beispiele 1 bis 11 und V1 bis V4). Die pigmentierten Epoxidharz/Härter-Massen wurden nach dem Mischen der durch Dispergierung hergestellten Epoxidharzpasten mit dem entsprechenden Härter als Schicht von 300 µm auf Faserzementplatten aufgetragen (Tabelle 3, Beispiele 12 bis 25 und V6 bis V9). Nach 24 Stunden Lagerung bei Raumtemperatur (RT) bzw. bei 5 °C, 95 % relativer Feuchte (r.F.) wurde die gehärtete Schicht mit einer Schicht von 200 µm der gleichen pigmentierten Epoxidharz/Härter-Masse überzogen. Nach 7 Tagen Aushärtungszeit erfolgte die Prüfung der Zwischenschichthaftung nach dem Torsionsabrißversuch mit der Beurteilung nach DIN 53230.

Die Ergebnisse sind in den Tabellen 2 und 3 zusammengefaßt, wobei in Tabelle 2 die Beispiele 1 bis 4 mit Vergleich V1, die Beispiele 5 und 6 mit Vergleich V2, die Beispiele 7 und 8 mit den Vergleichen V3 und V4 und die Beispiele 9 bis 11 mit Vergleich V2 gegenüberzustellen sind. Bei den einzelnen Gruppen sind deutlich die Vorteile der erfindungsgemäßen Mischungen erkennbar und zwar hinsichtlich der Trocknung unter feuchten Bedingungen, insbesondere aber bei der Beurteilung des Weißanlaufens des Films.

Aus der Tabelle 3, wo die Zuordnung der Beispiele zu dem Vergleichsbeispielen wie folgt durchgeführt ist: Beispiele 12-15/V6; Beisp. 16-17/V7; Beisp. 18-19/V8-V9 und Beisp. 20-25/V7, ist die Überlegenheit der erfindungsgemäßen Mischungen bezüglich der Torsionsabrißversuche deutlich zu entnehmen.

Tabelle 2

| Beispiel | 1 | 2 | 3 | 4 | 5 | 6 | 7 | 8 | 9 | 10 | 11 | V1 | V2 | V3 | V4 |
|---|---|---|---|---|---|---|---|---|---|---|---|---|---|---|---|
| Epoxid A | 100 | 100 | 100 | 100 | – | – | – | – | – | – | – | 100 | – | 100 | – |
| C | – | – | – | – | – | – | – | – | 100 | – | – | – | 100 | – | 100 |
| E | – | – | – | – | 100 | – | 100 | – | – | 100 | – | – | – | – | – |
| G | – | – | – | – | – | 100 | – | 100 | – | – | 100 | – | – | – | – |
| Härter A | – | – | – | – | 58 | 62 | – | – | – | – | – | 43 | 40 | – | – |
| B | 46 | – | – | – | – | – | – | – | – | – | – | – | – | – | – |
| C | – | 50 | – | – | – | – | – | – | 46 | 68 | 72 | – | – | – | – |
| D | – | – | 46 | – | – | – | – | – | – | – | – | – | – | – | |
| E | – | – | – | 49 | – | – | – | – | – | – | – | – | – | – | – |
| F | – | – | – | – | – | – | 73 | 78 | – | – | – | – | – | 55 | 50 |
| Topfzeit (min) | 30 | 25 | 30 | 25 | 30 | 25 | 60 | 45 | 30 | 25 | 20 | 30 | 30 | 70 | 120 |
| Trocknung (DIN 53150) | | | | | | | | | | | | | | | |
| Staubtrocknung; RT (h) | 1,5 | 1,5 | 2 | 2 | 2,5 | 2,5 | 3,5 | 3,5 | 2,5 | 2,5 | 2,5 | 2,5 | 2,5 | 3,5 | 4,5 |
| " ;5°C, 95% r.F. (h) | 6,5 | 6 | 5 | 5 | 4 | 4 | 5 | 5 | 8 | 5 | 5 | 3 | 8 | 7 | 10 |
| Klebfreitrocknung;RT (h) | 2 | 2 | 2,5 | 2,5 | 3 | 3 | 4 | 4 | 3 | 3 | 3 | 3 | 3 | 4 | 5 |
| " ;5°C, 95% r.F. (h) | 7 | 7 | 6 | 5,5 | 4,5 | 4,5 | 7 | 7 | 10 | 7 | 7 | 3,5 | 10 | 9 | 12 |
| Pendelhärte nach 24h,RT (s) (DIN 53157) | 186 | 195 | 181 | 201 | – | – | – | – | – | – | – | 187 | – | | |
| 7d,RT (s) | 199 | 207 | 206 | 205 | – | – | – | – | – | – | – | 211 | – | – | – |
| 24h, 5°C, 95% r.F.(s) | 95 | 89 | 101 | 96 | – | – | – | – | – | – | – | 104 | | | |
| Weißanlaufen d.Films[1)] | | | | | | | | | | | | | | | |
| 24 h, RT | 0 | 0 | 0 | 0 | 0 | 0 | 2 | 2 | 0 | 0 | 0 | 0 | 1 | 2 | 3 |
| 5°C, 95% r.F. | 4 | 3 | 3 | 3 | 3 | 3 | 3 | 3 | 2 | 0 | 0 | 5 | 5 | 3 | 4 |

1) Beurteilung nach DIN 5320
0 = bester Wert
5 = geringster Wert
RT= Raumtemperatur, r.F.= relative Feuchte
alle Mengenangaben sind T

Tabelle 3 Torsionsabrißversuche 2)

| Beispiele | | 12 | 13 | 14 | 15 | 16 | 17 | 18 | 19 | 20 | 21 | 22 | 23 | 24 | 25 | V6 | V7 | V8 | V9 |
|---|---|---|---|---|---|---|---|---|---|---|---|---|---|---|---|---|---|---|---|
| Epoxid | B | 50 | 50 | 50 | 50 | - | - | - | - | - | - | - | - | - | - | 50 | - | 50 | - |
| | D | - | - | - | - | - | - | - | - | 50 | - | - | - | - | - | - | 50 | - | 50 |
| | F | - | - | - | - | 50 | - | 50 | - | - | 50 | - | - | - | - | | | | |
| | H | - | - | - | - | - | 50 | - | 50 | - | - | 50 | - | - | - | - | | | |
| | K | - | - | - | - | - | - | - | - | - | - | - | 50 | - | - | - | - | - | |
| | M | - | - | - | - | - | - | - | - | - | - | - | - | 50 | - | - | - | - | - |
| | O | - | - | - | - | - | - | - | - | - | - | - | - | - | 50 | - | - | - | - |
| | | - | - | - | - | - | - | - | - | - | - | - | - | - | - | - | - | - | - |
| Härter | A | - | - | - | - | 15 | 16 | - | - | - | - | - | 10 | 10 | 10 | 11 | 10 | - | - |
| | B | 11,8 | - | - | - | - | - | - | - | - | - | - | - | - | - | - | - | - | - |
| | C | - | 12,8 | - | - | - | - | - | - | 12 | 17 | 18 | - | - | - | - | - | - | - |
| | D | - | - | 11,8 | - | - | - | - | - | - | - | - | - | - | - | - | - | - | - |
| | E | - | - | - | 12,8 | - | - | - | - | - | - | - | - | - | - | - | - | - | - |
| | F | - | - | - | - | - | - | 19 | 20 | - | - | - | - | - | - | - | - | 14 | 13 |
| RT | | 0 | 0 | 0 | 0 | 0 | 0 | 0 | 0 | 1 | 0 | 0 | 1 | 0 | 0 | 1 | 2 | 0 | 2 |
| 5°C, 95% r.F. | | 2 | 1 | 2 | 1 | 1 | 0 | 0 | 0 | 2 | 0 | 0 | 3 | 2 | 0 | 4 | 5 | 1 | 5 |

1) Beurteilung nach DIN 5320
0 = bester Wert
5 = geringster Wert
RT= Raumtemperatur, r.F.= relative Feuchte
alle Mengenangaben sind T

## Patentansprüche

1. Verfahren zur Herstellung eines Mehrschichtüberzugs auf einem Substrat, dadurch gekennzeichnet, daß die Schichten hergestellt werden durch

1. Aufbringen einer Mischung, enthaltend
   A) Epoxidverbindungen, sowie
   B) cyclische Carbonate
   C) Epoxidhärter, wobei als Epoxidhärter Mannichbasen aus aliphatischen, araliphatischen und/oder cycloaliphatischen Polyaminen, Aldehyden und ein- oder mehrwertigen Phenolen mit mindestens einer aldehydreaktiven Stelle im Kern, oder eine Mischung aus 64 Gew.% Isophorondiaminen und 36 Gew.% eines Amin-Adduktes aus einem Polyglycidylether der 2,2'-Bis(4-hydroxy-2-phenyl)-propans mit einem Epoxidequivalent von 185 und Isophorondiamin verwendet werden, oder
   D) ein Anlagerungsprodukt aus den Komponenten B) und/oder C), und
2. Härten dieser Mischung bei Temperaturen zwischen 5 °C und der Raumtemperatur.

**2.** Verfahren nach Anspruch 1, dadurch gekennzeichnet, daß als Komponente A) Glycidylether mit einem Epoxidequivalentgewicht zwischen 160 und 500 eingesetzt werden.

**3.** Verfahren nach einem oder mehreren der vorhergehenden Ansprüche, dadurch gekennzeichnet, daß als Komponente B) bei Raumtemperatur flüssige cyclische Carbonate der Formel

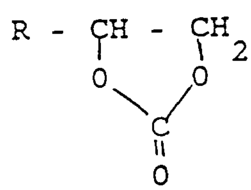

(I)

eingesetzt werden, in der R steht für Wasserstoff, einen Alkylrest mit 1-18 C-Atomen, hier wie im nachfolgenden geradkettig oder verzweigt; die Formelreste $-CH_2-O-R^1$ (Ia) oder $-CH_2-O-CO-R^1$ (Ib), worin $R^1$ ein Alkylrest mit 1 bis 18 C-Atomen, ein monocyclischer Aryl- oder Aralkylrest mit 6 bis 15 C-Atomen ist, wobei der Arylrest unsubstituiert ist oder jeweils bis zu drei Alkylreste mit 1 bis 4 C-Atomen, vorzugsweise 1 oder 2 Alkylreste enthält,
die Formelreste $-CH_2-O-R^2-O-CH_2-A$ (Ic) oder $-CH_2-O-CO-R^2-CO-O-CH_2-A$ (Id), worin $R^2$ ein Alkylenrest mit 1 bis 18 C-Atomen, geradkettig oder verzweigt, oder ein Phenylenrest und A der in Formel (I) dargestellte cyclische Carbonatrest ist, wobei im Falle von (Ic) $R^2$ auch ein Rest der Formel (Ie)

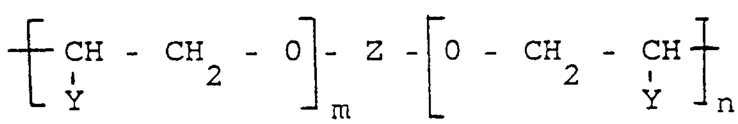

ist, in dem Z ein Alkylenrest mit 2-5 C-Atomen, Y Wasserstoff oder Methyl darstellt und m und n jeweils Werte von 0 bis 30 haben mit der Maßgabe, daß höchstens einer der Indices m oder n Null ist; Reste der Formel (If)

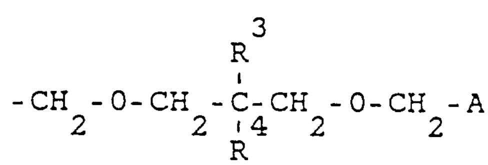

wobei
$R^3$ Wasserstoff ist, wenn $R^4$ $-O-CH_2-A$ ist und $R^3$ $-CH_3$, $-C_2H_5$ oder $-CH_2-O-CH_2-A$ ist, wenn $R^4$ $-CH_2-O-CH_2-A$ ist.

**4.** Verfahren nach einem oder mehreren der vorhergehenden Ansprüche, dadurch gekennzeichnet, daß als Polyamine m- und/oder p-Xylylendiamin, deren Hydrierungsprodukte oder 1,3- oder 1,4-Bis-(aminomethyl-)cyclohexan eingesetzt werden.

**5.** Verfahren nach Anspruch 1 , dadurch gekennzeichnet, daß solche Mannich-Basen eingesetzt werden, in denen das molare Verhältnis von Phenol zu Polyamin zu Aldehyd bei der Herstellung 1:1:1 bis 1:3:3, vorzugsweise bis 1:1,4:1,3 beträgt.

**6.** Verfahren nach Anspruch 1 oder 5, dadurch gekennzeichnet, daß Mannich-Basen der Formel

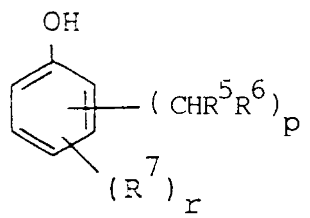

eingesetzt werden, worin

$R^5$ Wasserstoff, eine Alkylgruppe mit 1-4 C-Atomen oder der Phenylrest ist,
$R^6$ den Rest von Xylylendiaminen oder deren Hydrierungsprodukte darstellt und
$R^7$ Wasserstoff oder eine Methyl-, tert.-Butyl- oder Hydroxylgruppe sowie der Rest

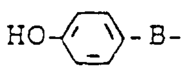

ist, in der

B $-CH_2-$, $-C(CH_3)_2$ oder $-SO_2-$ bedeutet, r und p ist jeweils eine ganze Zahl von 1 bis 3.

**7.** Verfahren nach einem oder mehreren der vorhergehenden Ansprüche, dadurch gekennzeichnet, daß als Komponente D Umsetzungsprodukte von Komponente C mit Ethylen- und/oder Propylencarbonat eingesetzt werden.

**8.** Verfahren nach einem oder mehreren der vorhergehenden Ansprüche, dadurch gekennzeichnet, daß Umsetzungsprodukte eingesetzt werden, in denen 0,1 bis 40, vorzugsweise 5 bis 30 % des aktiven Aminwasserstoffs mit den cyclischen Carbonaten reagiert haben.

**9.** Verfahren nach einem oder mehreren der vorhergehenden Ansprüche, dadurch gekennzeichnet, daß Epoxidharz-Addukte mit einer Viskosität von 20 bis 10.000, vorzugsweise 100 bis 5.000 mPa.s (25 °C) und einem Epoxidharzanteil von 3 bis 30, vorzugsweise 7 bis 20 Gew.-% eingesetzt werden.

**10.** Verfahren nach einem oder mehreren der vorhergehenden Ansprüche, dadurch gekennzeichnet, daß bis zu 10 Gew.-% primäre aliphatische Monoalylamine mit 5 bis 18 C-Atomen im Alkylrest, bezogen auf die Härterkomponenten C) zugesetzt werden.

**11.** Verfahren nach einem oder mehreren der vorhergehenden Ansprüche, dadurch gekennzeichnet, daß geringe Mengen reaktive Verdünner mitverwendet werden.

**12.** Verfahren nach einem oder mehreren der vorhergehenden Ansprüche, dadurch gekennzeichnet, daß hydroxylgruppenhaltige Lösungsmittel, Extenderharze, Pigmente, Füllstoffe, Farbstoffe, Verlaufmittel, Thixotropiemittel und/oder Beschleuniger mitverwendet werden.

**13.** Mehrschichtüberzug, hergestellt durch ein Verfahren nach einem oder mehreren der vorhergehenden Ansprüche.

**14.** Mehrschichtüberzug nach Anspruch 15, auf Metall, Beton, Faserzement, Glas, Holz, Kunststoffen sowie in Form von Klebstoffen, Vergußmassen und Elektroisoliermaterial.

## Claims

**1.** Process for producing a multilayer coating on a substrate, wherein the layers are produced by

1. applying a mixture comprising
   A) epoxide compounds and
   B) cyclic carbonates,
   C) epoxide curing agents, the epoxide curing agents used being Mannich bases formed from aliphatic, araliphatic and/or cycloaliphatic polyamines, aldehydes and monohydric or polyhydric phenols having at least one aldehyde-reactive position in the nucleus, or mixtures comprising 64 % by weight of isophorone diamines and 36 % by weight of an amine adduct obtained from a polyglycidyl ether of 2,2'-bis-(4hydroxy-2-phenyl)-propane having an epoxide equivalent weight of 185, and isophorone diamine or
   D) an addition reaction product of components B) and/or C), and
2. curing said mixture at temperatures between 5 °C and room temperature.

**2.** Process as claimed in claim 1, wherein glycidyl ethers having an epoxide equivalent weight between 160 and 500 are employed as component A).

**3.** Process as claimed in one or more of the preceding claims, wherein cyclic carbonates, liquid at room temperature, having the formula

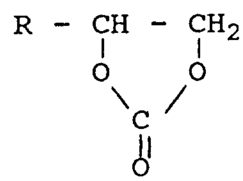

in which R represents hydrogen, an alkyl radical having 1-18 carbon atoms, here and in the subsequent text linear or branched; the radicals $-CH_2-O-R^1$ (Ia) or $-CH_2-O-CO-R^1$ (Ib), in which $R^1$ is an alkyl radical having 1 to 18 carbon atoms, or a monocyclic aryl or aralkyl radical having 6 to 15 carbon atoms, the aryl radical being unsubstituted or containing in each case up to three alkyl radicals having 1 to 4 carbon atoms, preferably 1 or 2 alkyl radicals; the radicals $-CH_2-O-R^2-O-CH_2-A$ (Ic) or $-CH_2-O-CO-R^2-CO-O-CH_2-A$ (Id) in which $R^2$ is an alkylene radical having 1 to 18 carbon atoms, linear or branched, or a phenylene radical and A is the cyclic carbonate radical shown in formula (I), $R^2$ in the case of (Ic) being a radical of the formula (Ie)

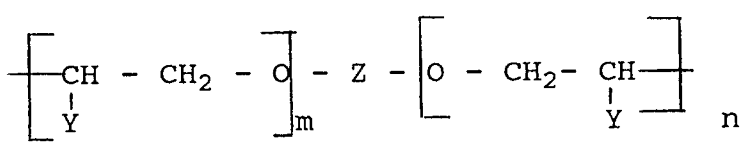

in which Z represents an alkylene radical having 2 to 5 carbon atoms, Y represents hydrogen or methyl and m and n each have values from 0 to 30, subject to the proviso that not more than one of the indices m or n is zero; or radicals of the formula (If)

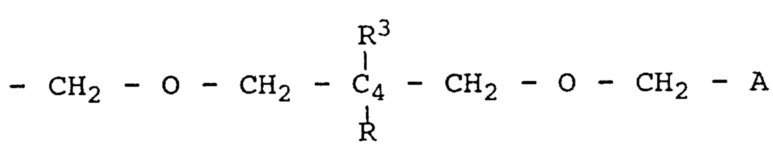

in which $R^3$ is hydrogen if $R^4$ is $-O-CH_2-A$ and $R^3$ is $-CH_3$, $-C_2H_5$ or $-CH_2-O-CH_2-A$ if $R^4$ is $-CH_2-O-CH_2-A$, are employed as component B).

**4.** Process as claimed in one or more of the preceding claims, wherein m-xylylenediamine and/or p-xylylenediamine, hydrogenation products thereof or 1,3-bis-(aminomethyl)-cyclohexane or 1,4-bis-(aminomethyl)-cyclohexane are employed as polyamines.

**5.** Process as claimed in claim 1, wherein Mannich bases in which the molar ratio of phenol to polyamine to aldehyde, in their preparation, is 1:1:1 to 1:3:3, preferably up to 1:1.4:1.3, are employed.

**6.** Process as claimed in claim 1 or 5, wherein Mannich bases of the formula

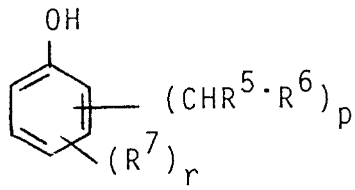

are employed, in which formula

$R^5$ is hydrogen, an alkyl group having 1-4 carbon atoms or the phenyl radical,
$R^6$ represents the radical of xylylenediamines or hydrogenation products thereof and
$R^7$ is hydrogen or a methyl, tert.-butyl or hydroxyl group and also the radical

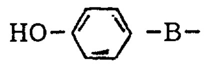

in which B denotes $-CH_2-$, $-C(CH_3)_2-$ or $-SO_2-$ and r and p are each an integer from 1 to 3.

**7.** Process as claimed in one or more of the preceding claims, wherein reaction products of component C) with ethylene carbonate and/or propylene carbonate are employed as component D).

**8.** Process as claimed in one or more of the preceding claims, wherein reaction products in which 0.1 to 40 %, preferably 5 to 30 %, of the active amine hydrogen have reacted with the cyclic carbonates are employed.

**9.** Process as claimed in one or more of the preceding claims, wherein epoxide resin adducts having a viscosity of 20 to 10,000, preferably 100 to 5,000, mPa.s (25 °C) and an epoxide resin content of 3 to 30, preferably 7 to 20, % by weight, are employed.

**10.** Process as claimed in one or more of the preceding claims, wherein up to 10 % by weight of primary aliphatic monoalkylamines having 5 to 18 carbon atoms in the alkly radical are added, relative to the curing agent components (C).

**11.** Process as claimed in one or more of the preceding claims, wherein small amounts of reactive thinners are concomitantly used.

**12.** Process as claimed in one or more of the preceding claims, wherein solvents containing hydroxyl groups, extender resins, pigments, fillers, dyestuffs, leveling agents, thixotropic agents and/or accelerators are concomitantly used.

**13.** Multilayer coating produced by using a process as claimed in one or more of the preceding claims.

**14.** Multilayer coating as claimed in claim 13, on metal, concrete, fibrated concrete, glass, wood and plastics and also in the form of adhesive, potting compounds and electrical insulating materials.

## Revendications

1. Procédé pour produire un revêtement en plusieurs couches sur un substrat, caractérisé en ce que les couches sont préparées par:
   (1.) Application d'un mélange, contenant ,
   (A) des époxydes, ainsi que
   (B) des carbonates cycliques,
   (C) des durcisseurs pour les époxydes, avec utilisation, à titre de durcisseurs des époxydes, de bases de Mannich, obtenues à partir de polyamines aliphatiques, araliphatiques et/ou cycloaliphatiques, d'aldéhydes et de monophénols ou de polyphénols comportant au moins dans le noyau une position pouvant réagir avec les aldéhydes, ou un mélange de 64 % en poids d'isophorone diamines et de 36 % en poids d'un produit d'addition d'amines formé à partir d'un éther polyglycidylique du 2,2'-bis(4-hydroxy-2-phényl)-propane, ayant un équivalent d'époxyde de 185, et d'isophorones diamine, ou bien
   (D) un produit de fixation obtenu à partir des constituants (B) et/ou (C), et
   (2.) Durcissement de ce mélange à des températures comprises entre 5 °C et la température ambiante.

2. Procédé selon la revendication 1, caractérisé en ce qu'on utilise comme constituant (A) un éther glycidylique ayant un poids d'équivalent d'époxyde compris entre 160 et 500.

3. Procédé selon une ou plusieurs des revendications précédentes, caractérisé en ce qu'on utilise comme constituant (B) des carbonates cycliques liquides à température ambiante et répondant à la formule

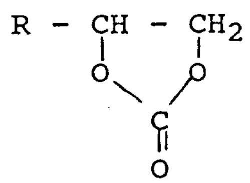

(I)

dans laquelle R représente un atome d'hydrogène, un reste alkyle ayant 1 à 18 atomes de carbone, et qui, ici comme dans ce qui suit, est linéaire ou ramifié; le reste $-CH_2-O-R^1$ (1a) ou $-CH_2-O-CO-R_2$ (Ib), formules dans lesquelles $R^1$ représente un reste alkyle ayant 1 à 18 atomes de carbone, un reste aryle ou aralkyle monocyclique ayant 6 à 15 atomes de carbone, le reste aryle n'étant pas substitué ou comportant à chaque fois jusqu'à trois restes alkyles ayant 1 à 4 atomes de carbone et comportant de préférence un ou deux restes alkyle, les restes-$CH_2-O-R^2-O-CH_2-A$ (Ic) ou - $CH_2-O-CO-R^2-CO-O-CH_2-A$ (Id), formules dans lesquelles $R^2$ représente un reste alkylène ayant 1 à 18 atomes de carbone, linéaire ou ramifié, ou un reste phénylène et A représente le reste carbonate cyclique représenté dans la formule (I), et, dans le cas de (Ic), $R^2$ peut également représenter un reste de formule (Ie)

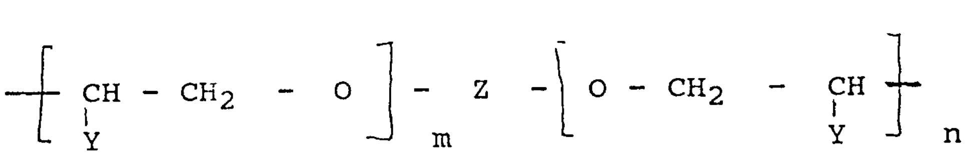

dans laquelle Z représente un reste alkylène ayant 2 à 5 atomes de carbone, Y représente un atome d'hydrogène ou un groupe méthyle, et m et n sont des nombres valant chacun de 0 à 30, à la condition qu'au maximum l'un des indices m ou n est nul; des restes de formule (If)

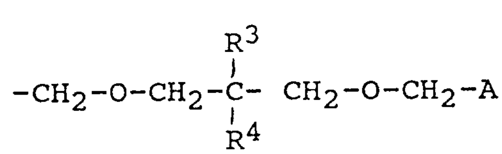

dans laquelle, $R^3$ représente un atome d'hydrogène lorsque $R^4$

représente -O-$CH_2$-A et $R^3$ représente -$CH_3$, -$C_2H_5$ ou -$CH_2$-O-$CH_2$-A, lorsque $R^4$ représente -$CH_2$-O-$CH_2$-A.

**4.** Procédé selon une ou plusieurs des revendications précédentes, caractérisé en ce qu'on utilise comme polyamines la m- et/ou la p-xylène diamine, leurs produits d'hydrogénation ou le 1,3- ou le 1,4- bis (aminométhyle)-cyclohexane.

**5.** Procédé selon la revendication 1, caractérisé en ce qu'on utilise des bases de Mannich dans lesquelles le rapport molaire du phénol à la polyamine à l'aldéhyne a une valeur allant, lors de la préparation, de 1:1:1 à 1:3:3, avantageusement jusqu'à 1:1,4:1,3.

**6.** Procédé selon la revendication 1 ou 5, caractérisé en ce qu'on utilise des bases de Mannich de formule

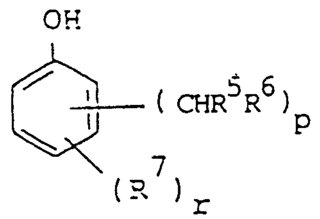

dans laquelle

$R^5$ représente un atome d'hydrogène, un groupe alkyle ayant 1 à 4 atomes de carbone ou le reste phényle,

$R^6$ représente le reste de xylène diamines ou de leurs produits d'hydrogénation et,

$R^7$ représente un atome d'hydrogène ou un groupe méthyle, tert.-butyle ou hydroxyle, ainsi que le reste de formule :

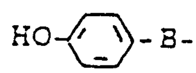

dans laquelle,

B représente -$CH_2$-, -C($CH_3$)2 ou -$SO_2$, et r et p représentent chacun un nombre entier valant 1 à 3.

**7.** Procédé selon une ou plusieurs des revendications précédentes, caractérisé en ce qu'on utilise, comme constituant (D), des produits de la réaction du constituant (C) avec le carbonate d'éthylène et/ou avec le carbonate de propylène.

**8.** Procédé selon une ou plusieurs des revendications précédentes, caractérisé en ce qu'on utilise des produits de réaction dans lesquels 0,1 à 40 %, avantageusement 5 à 30 % de l'hydrogène actif d'amines ont réagi avec les carbonates cycliques .

**9.** Procédé selon l'une ou plusieurs des revendications précédentes, caractérisé en ce qu'on utilise des produits d'addition d'une résine époxyde ayant une viscosité de 20 à 10000, avantageusement de 100 à 5 000 mPa.s (à 25° C) et comportant une proportion de résine époxyde de 3 à 30, avantageusement de 7 à 20 % en poids.

**10.** Procédé selon l'une ou plusieurs des revendications précédentes, caractérisé en ce qu'on ajoute jusqu'à 10 % en poids de monoalkylamines aliphatiques primaires ayant 5 à 18 atomes de carbone dans le reste alkyle, par rapport au constituant durcisseur (C).

**11.** Procédé selon l'une ou plusieurs des revendications précédentes, caractérisé en ce qu'on co-utilise de faibles quantités d'un diluant réactif.

**12.** Procédé selon une ou plusieurs des revendications précédentes, caractérisé en ce qu'on co-utilise des solvants contenant des groupes hydroxyles, des résines d'allongement, des pigments, des charges, des colorants, des agents de fluidité, des agents conférant de la thixotropie et/ou des accélérateurs.

**13.** Revêtement à plusieurs couches, produit par un procédé selon une ou plusieurs des revendications précédentes.

**14.** Revêtement à plusieurs couches selon la revendication 13, sur du métal, du béton, du fibro-ciment, du verre, du bois, des matières plastiques ainsi que sous forme de colle, de composition à couler et de matières d'isolation électrique.